# EUROPEAN PATENT APPLICATION

(11) **EP 0 838 300 A2**
(43) Date of publication of application: **29.04.1998**
(21) Application number: 97307368.7
(22) Date of filing: 22.09.1997
(51) Int. Cl.: B23K 26/00

(54) **Making three dimensional objects**

(30) Priority: 26.09.1996 GB 9620080
(71) Applicant: GEC-MARCONI LIMITED, Stanmore, Middlesex HA7 4LY (GB)
(72) Inventor: Bocking, Clive Edmund, High Wycombe, Buckinghamshire HP13 6BW (GB); Sangha, Surinder Pal Singh, Heston, Middlesex TW5 0JE (GB); Jacobson, David Michael, Wembley, Middlesex HA9 8LP (GB)
(74) Representative: Walker, Andrew John

(57) **Abstract**

A method for making three dimensional objects comprising the following steps. Making a plurality of sheets (42) and then stacking the sheets to form a stack (40) which corresponds in shape to that of the object. The sheets have an intermediate layer supporting a solder layer on each of their sides. The stack is then heated and the sheets are bonded together by diffusion soldering.

## Description

The present invention relates to making three dimensional (3D) objects and is particularly, but not exclusively, related to rapid prototyping and rapid toolmaking.

3D objects need to be made for a variety of purposes. Commonly prototypes are made and used in manufacture of products including components for vehicles, especially engine parts. Objects may also be made to serve as tools to make other products. Traditionally 3D objects were made by hand which was a time consuming and skilled task. Developments in Computer Aided Design (CAD) and Computer Aided Engineering (CAE) allow objects now to be produced from CAD designs.

Most of the techniques which have been developed for producing objects from CAD designs involve several processing steps before an object in the desired material (usually metal) is formed. Many of the techniques involve an intermediate step in which a model or a mould is formed out of polymer. An example is stereolithography in which a model is created within a vat of liquid UV curable resin. An X-ray scanning laser writes in the liquid resin and solidifies part of the resin to form a solid layer on a plate. This layer is a single slice of the model which will ultimately be formed. The plate is lowered deeper into the vat and more liquid resin flows over and covers the solid layer. As the plate is lowered, a series of writing steps builds up the model.

Methods which have been developed to produce metal objects directly in metal, such as sintering powders, do not provide usually particularly accurate models since the models suffer from shrinkage and porosity and this complicates design of articles. Furthermore, powder handling is messy and powders can become contaminated easily.

It is an object of the present invention to provide a better method of making objects.

According to a first aspect the present invention provides a method of making objects comprising the steps of:
making a plurality of sheets;
stacking the sheets to form a stack; and
bonding the stack of the sheets together to form the object
in which the sheets comprise at least two layers of metal and adjacent sheets are bonded together by diffusion soldering.

The term diffusion soldering refers to a process in which pieces to be joined together are heated to a temperature sufficient to provide melt in a joint and to drive the constitution of the metallurgical phases away from those originally present in the joint. The pieces are provided with a base, intermediate layer which supports a solder layer. In order to encourage the reaction which changes the alloy constitution, the temperature is usually either above the eutectic temperature of a combination of material of the solder layer and material adjacent to the solder layer or the melting point of intermetallic compounds formed by these materials.

The term sheets refers to shapes having a thickness which is small relative to dimensions of width and/or breadth. It includes shapes which are both planar and non-planar. Some sheets may have holes passing through their thickness whilst others may be solid.

Preferably the sheets are stacked to construct a vertical stack. However, non-vertical, for example horizontal, stacks may be constructed.

Joints between adjacent sheets produced by diffusion soldering are substantially seamless and are substantially void free. Therefore they may also be leak free. Diffusion soldered joints do not degrade significantly with time and are much more stable to environmental changes than joints made with conventional adhesives. Furthermore, since little liquid is generated in diffusion soldering, there is little leakage of solder out of the joints and therefore little shrinkage Shrinkage is considerably less than in an organic adhesive joint. This combination of properties makes objects made by the method especially suitable for making moulds for injection moulding or die casting.

The method provides a way of making objects in a layer object manufacturing route which are heat resistant and relatively strong. Metal objects, non-metal objects and metal/non-metal composites may be made at relatively low temperatures.

Preferably at least one sheet comprises a structural member carrying the layers of metal. The layers of metal may cover the entire surface of a side of the structural member. Most preferably both sides of the structural member are covered with the layers of metal. The layers of metal may not be continuous but may contain holes or gaps.

Preferably the structural member has a thickness between 20 and 1000µm. Most preferably the thickness is about 50µm. Preferably the layers of metal comprise a base, cladding or intermediate layer having a thickness between 5 and 100µm and a solder layer having a thickness between 0.5 and 5µm. Most preferably the thickness of the base layer is between 8 and 10µm and the thickness of the solder layer is about 2µm.

Preferably the sheets have a plurality of different shapes. Therefore once the sheets are stacked, the stack may have tapering, curved or contoured sides or edges.

Preferably the structural member is of metal. It may be of copper. Alternatively it may by steel, nickel alloy, molybdenum or other metals or alloys. it may be non-metallic, for example ceramic or polymeric. In one example of the method sheets having metallic and non-metallic structural members are used.

In an example using sheets each comprising a metal structural member carrying two layers of metal, it is possible to make solid metal objects directly from a CAD file. It may be convenient to use data in the CAD file to drive a cutter, such as a CO₂ laser, to cut out a series of sheets having varying shapes which form the object when they are stacked in a correct sequence.

In another example of the method, the sheets may comprise only a base layer and a solder layer and the structural member may be omitted altogether. This would enable very thin sheets to be used for making objects having fine detail.

According to a second aspect the present invention provides an object made in accordance with the first aspect of the invention.

Preferably the object is substantially of metal. Preferably the object has a desired outer configuration (that is rather than internal structure) defined by the peripheries of the pluralities of sheets.

An embodiment of the invention will now be described, by way of example only, with reference to the accompanying drawings in which:
Figure 1 shows a side view of a lamella or sheet used in the making of an object;
Figure 2 shows a step in the making of the object; and
Figure 3 shows an object made in accordance with the invention.

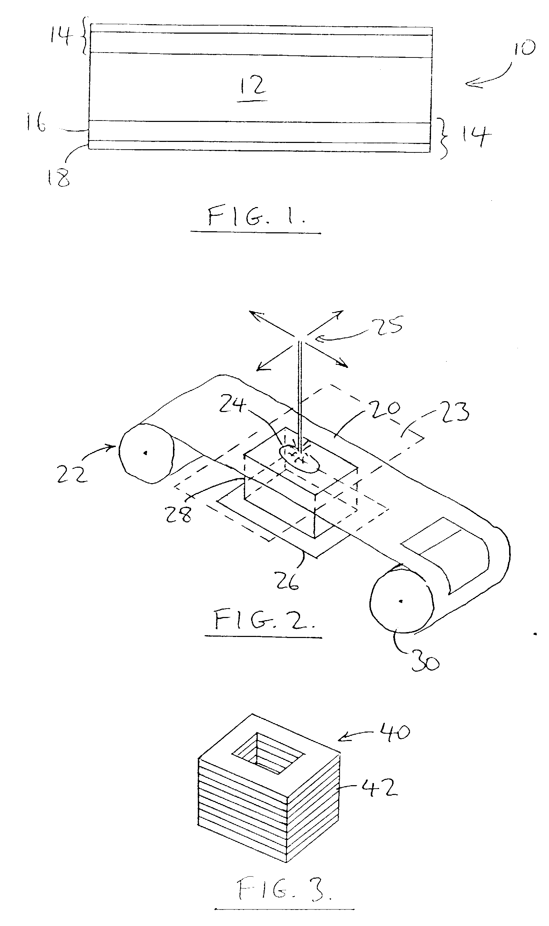

Figure 1 shows a side view of part of a sheet or a lamella 10 used in making objects according to the invention. The lamella 10 comprises a metal body 12 coated on either side with a composite solder layer 14. The metal body 12 is of copper. The composite layer 14 comprises a base layer 16 of copper coated with an outer solder layer 18 of tin. In this embodiment, since the sheet has a copper body, the base layer of copper may be omitted.

Typically the body 12 is 50µm thick, the base layer 16 is 10µm thick and the solder layer 18 is 2µm thick. The solder layer would not usually be less than 1µm thick because this might not provide sufficient liquid solder to bond together adjacent lamellae.

An object is assembled by stacking together a large number of lamellae 10. For example, in the embodiment given above, to make an object 2cm high, this would require a stack of over 200 lamellae. The design of the object is held in a CAD file in a 3D form defined in terms of coordinates in space. A computer converts the design by "slicing" it into a large number of lamellae having a specified thickness. The lamellae have individual shapes which define the surface of the object to be made when the lamellae are stacked.

Figure 2 shows part of the process of making an object. The lamellae are formed from metal sheet 20 which conveniently is supplied in the form of a roll 22. The metal sheet already carries the composite layer of copper (if appropriate) and tin. This has been applied by electroplating. Alternatively, the metal sheet may not carry a composite layer. Such a layer may be a separate foil having a copper or silver base layer coated on both sides with a solder layer such as tin. The separate foil is inserted between the lamellae before diffusion soldering occurs. An advantage of using such a foil is that it is relatively soft and so it can accommodate unevenness in the surfaces of lamellae.

A new part of the sheet is unrolled from the roll and brought into position beneath an x-y scanning CO₂ laser 25. The computer controls movement of the laser 25 and thus the cutting of the sheet 20 so that a lamella 24 having the correct shape is produced. The lamella is detached from the sheet in the cutting operation and settles onto a plate 26. The roll 22 is unrolled further to bring a new part of the sheet 20 into the working area 23 for the laser 25 to cut the next lamella. Each lamella 10 is cut in the working area 23 so as to settle on, and be in register with, the lamella which was cut immediately beforehand. In this way the lamellae register together in a stack 28 to build up the object. Registering of lamellae in the stack may be achieved by having some kind of marker arrangement such as a lug or a hole at a preselected location in each lamella. The holes may be aligned by using a rod or a light beam. Waste sheet is rolled into another roll 30. Of course, the sheets could be cut from individual flat pieces and stacked rather than cut from a roll.

The next step is to consolidate the lamellae 10 into a solid object. This is achieved by soldering them together by diffusion soldering. In the embodiment discussed above, that is a Cu/Sn system, lamellae are pressed together under a pressure of about 1 kg/mm² and fused at 680°C for about 10 to 45 minutes. In an alternative embodiment the lamellae 10 are provided with composite layers 14 comprising a base layer of silver supporting a solder layer of tin. In this embodiment the lamellae 10 are fused at less than 300°C for about 10 to 45 minutes.

The mechanism of bonding between layers will now be explained with reference to a system having a copper sheet coated with a layer of silver which is coated in turn with a layer of tin. On heating to 275°C, that is above the melting point of the eutectic binary alloy formed by silver and tin (221°C), the layers of silver and tin first form the eutectic binary alloy in liquid form. Compound Ag₃Sn then forms by reaction between silver and the liquid phase Ag-Sn at the liquid/silver interface. By ensuring that the silver layers are sufficiently thick relative to the tin layers to constitute 75% or more by volume of the total volume of the silver and tin layers, that is much more than the volume proportion of silver (3.5%) in the eutectic alloy, and by maintaining the joint temperature above 221°C for a sufficient length of time to cause all the tin in the layers to react to form Ag₃ Sn thus leaving a surplus of silver in the joints, the resulting joints will have a remelt temperature of more than 480°C, the melting point of Ag₃Sn. Extended heating then causes the Ag₃Sn which is fairly brittle to transform to silver with the tin retained in solid solution.

The thicknesses given in relation to Figure 1 above are examples of one system. The ratio of thicknesses of the base layer 16 to the solder layer 18 is chosen such that there is a balance between providing enough solder without there being an excess so that the joint which forms will return to the primary phase of the base layer material with the solder layer material retained in solid solution. An excess of solder may weaken the object to be made, especially if it is made with lamellae having bodies of high strength material, such as steel. Therefore the amount of solder material should be minimised. The ratio of thicknesses of layers and overall thicknesses of individual lamellae are optimised to provide suitable flowing characteristics of the solder and desirable properties of a finished object.

EP 0 416 847 discloses a diffusion soldering process which is suitable for this method.

For jewellery items a gold/tin system may be used. If the base alloy contains copper, silver and/or other metals, a layer of pure gold, typically of 10µm thickness, is applied conveniently by electroplating. The gold layer is followed by a tin layer of 1-3µm thickness.

Diffusion soldering bonds together all of the lamellae and produces the object in a solid metal form. The resolution of detail in the object approximates to the thickness of the lamellae which are used. In the example given above this is a little more than 70µm. This compares with about 100µm for a typical stereolithography process.

The object, having been generated in solid metal rather than in polymer or in a polymer/metal composite, is strong and can withstand high temperatures. Surfaces of the object which have been formed by diffusion soldered lamellae can therefore serve as load bearing surfaces. Therefore the method can be used to make objects such as moulds. The object made according to the invention does not have to be an intermediate in making an end product but may itself be used for the purpose for which is was designed, such as serving as a mould for an injection moulding machine.

In the embodiment discussed direct manufacture of a metal object has been described. However, sheets having a non-metallic body coated with metal solder layers may be used to make substantially non-metallic (for example ceramic) objects or objects having metallic and non-metallic layers. Very tough ceramic objects having special properties such as enhanced toughness (reduced brittleness) may be made. Ceramic sheets may be manufactured by known techniques and then metal coated with a composite layer by suitable steps involving sputtering and/or chemical vapour deposition in conjunction with electroplating. Lasers or diamond tools may be used to cut into a correct shape to build up the object.

Although in the foregoing the solder layer is stated to be tin, other materials such indium may be used.

Of course objects can be assembled having sheets comprising bodies of different materials, that is a plurality of different materials in the same object, in order that particular electrical and/or magnetic properties may be obtained.

Figure 3 shows an object 40 made in accordance with the invention. The object 40 has a plurality of layers 42 formed by a plurality of bonded lamellae.

## Claims

1. A method of making objects comprising the steps of:
making a plurality of sheets;
stacking the sheets to form a stack; and
bonding the stack of sheets together to form the object
in which the sheets comprise at least two layers of metal and adjacent sheets are bonded together by diffusion soldering.

2. A method according to claim 1 in which the layers of metal comprise a base layer having a thickness between 5 and 100µm and a solder layer having a thickness of between 0.5 and 5µm.

3. A method according to claim 1 or claim 2 in which at least one sheet comprises a structural member carrying the layers of metal.

4. A method according to claim 3 in which the structural member has a thickness between 20 and 1000µm.

5. A method according to claim 3 or claim 4 in which sheets having metallic and non-metallic structural members are used.

6. A method according to any of claims 2 to 5 in which the base layer is copper and the solder is tin.

7. A method according to any of claims 2 to 5 in which the base layer is copper and the solder layer is tin.

8. An object made in accordance with any preceding claim.

9. An object according to claim 8 which is substantially of metal.

10. An object according to claim 9 which is a component for a mould.
